Europäisches Patentamt

European Patent Office

Office européen des brevets

(11) Veröffentlichungsnummer: **0 443 129 A2**

(12) **EUROPÄISCHE PATENTANMELDUNG**

(21) Anmeldenummer: 90123655.4

(22) Anmeldetag: 08.12.90

(51) Int. Cl.⁵: **B29C 67/22**

(30) Priorität: 19.01.90 DE 4001416

(43) Veröffentlichungstag der Anmeldung:
28.08.91 Patentblatt 91/35

(84) Benannte Vertragsstaaten:
DE FR GB IT NL

(71) Anmelder: **ELASTOGRAN POLYURETHANE GMBH**
**Postfach 1107**
**W-2844 Lemförde(DE)**

(72) Erfinder: **Wallner, Josef**
**Brauneckstrasse 2**
**W-8150 Holzkirchen(DE)**
Erfinder: **Schumacher, Wolfgang**
**Hauptstrasse 198**
**W-8014 Neubiberg(DE)**

(74) Vertreter: **Langfinger, Klaus-Dieter, Dr. et al**
**BASF AG Carl-Bosch-Strasse 38**
**W-6700 Ludwigshafen(DE)**

(54) Vorrichtung zur kontinuierlichen Herstellung von Polyurethan-Schaumstoffplatten.

(57) Die Vorrichtung zur kontinuierlichen Herstellung von mit Deckschichten (7, 8) beschichteten Polyurethan-Schaumstoffplatten mit zwei einen Formhohlraum (5) zwischen sich begrenzenden endlosen Transportbändern (1 und 2) und mit einem quer zur Produktionsrichtung oszillierenden Mischkopf (6) ist mit Induktionsheizugnen (10 und 11) für die Transportbänder (1 und 2) aus elektrisch und magnetisch leitendem Material und ggf. mit weiteren Induktionsheizungen (12, 13) für die Deckschichten (7, 8) aus elektrisch und magnetisch leitendem Material versehen. Durch diese Induktionsheizungen wird eine sehr wirtschaftlich (hoher Wirkungsgrad) arbeitende Heizung geschaffen, die sehr genau geregelt werden kann, so daß eine genaue Wärmedosierung in Anpassung an die Produktionsbedingungen möglich ist. Es ist ein präzises Anfahren der Anlage möglich.

EP 0 443 129 A2

## VORRICHTUNG ZUR KONTINUIERLICHEN HERSTELLUNG VON POLYURETHAN-SCHAUMSTOFFPLATTEN

Die Erfindung betrifft eine Vorrichtung nach dem Oberbegriff des Anspruchs 1, des Anspruchs 2 oder des Anspruchs 6.

Vorrichtungen dieser Art, die als sog. Doppelbandanlagen bezeichnet werden, sind in der unterschiedlichsten Ausgestaltung bekannt. Bei vielen Verfahrensweisen ist es erforderlich, die Transportbänder, die häufig durch eine Kette aus einzelnen Platten aus Stahl gebildet sind und die Deckschichten, beispielsweise aus verzinktem Stahlblech, aufzuheizen. Dieses geschieht bei bekannten Vorrichtungen durch Infrarotheizungen, Warmluftheizungen oder durch elektrische Widerstandsheizungen. Infrarotheizungen heizen durch Wärmestrahlung mit Hilfe elektrischer oder mit Gas betriebener Keramikstrahler. Warmluftheizungen stellen eine indirekte Beheizung durch Konvektion mit Hilfe von Wärmetauschern dar. Elektrische Widerstandsheizungen werden durch mit elektrischem Strom versorgte Drähte in den Platten gebildet, wobei eine aufwendige Parallelschaltung erforderlich ist.

Die Infrarotheizung und die Warmluftheizung sind nur sehr ungenau regelbar, und es müssen lange Aufheizzeiten bzw. eine ungenaue Wärmeverteilung und größere Wärmeverluste in Kauf genommen werden. Der Wirkungsgrad, insbesondere bei Infrarot- und Warmluftheizungen, ist schlecht. Die Infrarotstrahler strahlen nach, wenn die Anlagen abgestellt wird. Es kommt zu örtlichen Überhitzungen beim Wiederanfahren der Anlage. Warmluftheizungen haben einen hohen Platzbedarf. Die elektrischen Widerstandsheizungen sind sehr aufwendig zu erstellen und daher so teuer, daß sie wirtschaftlich kaum vertretbar sind.

Der Erfindung liegt nun die Aufgabe zugrunde, eine Vorrichtung der eingangs genannten Art zu schaffen, durch die eine wirtschaftliche und gut regelbare Heizung der Transportbänder und/oder der Deckschichten möglich ist.

Diese Aufgabe wird bei Vorrichtungen nach den Ansprüchen 1, 2 oder 6 durch den Einsatz von entsprechend ausgebildeten und angeordneten Induktionsheizungen gelöst. Induktionsheizungen sind bekannt. Die Sekundärwindung einer solchen Induktionsheizung, die praktisch ein Transformator ist, bildet das Transportband bzw. die Deckschicht. Die Sekundärwindung ist also kurzgeschlossen. Voraussetzung ist daher eine entsprechend gute elektrische und magnetische Leitfähigkeit der zu erwärmenden Teile, d.h. der Transportbänder und/oder der Deckschichten. Bei den meisten Doppelbandanlagen bestehen die Transportbänder aus sogenannten Plattenketten aus Stahl. Die Deckschichten sind häufig Stahlbleche, so daß die Forderung nach elektrischer und magnetischer Leitfähigkeit von vornherein erfüllt ist.

Bei dem Einsatz einer Induktionsheizung wird der hohe Wirkungsgrad ausgenutzt, mit denen diese Induktionsheizungen arbeiten. Der Wärmebedarf für den Reaktionsprozeß des Polyurethans kann genau dosiert werden. Es wird energiesparend gearbeitet, da genau die Wärme zugeführt werden kann, die gewünscht wird, und zwar vorzeigsweise nur auf einem Drittel der Länge des Doppelbandes, d.h. in dem Bereich, in dem der Aufschäumprozeß stattfindet. Die Temperatur des restlichen Bereiches des Doppelbandes ist für die Reaktion nicht mehr von nennenswerter Bedeutung. Die Wärme kann mit Hilfe der Induktionsheizungen direkt dort zugeführt werden, wo sie benötigt wird.

Es ist erfindungsgemäß möglich, ohne vorherigen Aufheizvorgang mit der Produktion zu beginnen, da eine sehr genaue Dosierung und Regelung möglich ist. Zudem kann beim Anfahren auch entsprechend weniger Energie zugeführt werden und es können erst einmal mehrere Umläufe der Transportbänder ohne Produktion für die Aufheizung erfolgen. Hierzu müssen geeignete Maßnahmen getroffen werden, d.h. der im Doppelband befindliche Produktstrang muß entweder mechanisch hydraulisch oder pneumatisch etwas angehoben werden, um Beschädigungen der unteren Deckschicht des Produktstranges durch das bereits laufende Transportband zu vermeiden. Grundsätzlich treten die Vorteile sowohl bei der Induktionsheizung für die Transportbänder als auch bei derjenigen für die Deckschichten auf. Es ist einzusehen, daß, je nach den Anforderungen, die Induktionsheizung dort eingesetzt wird, wo dies zweckmäßig ist. Wenn beispielsweise mit Deckschichten aus nichtleitendem Material gearbeitet wird, ist eine Induktionsheizung nicht einsetzbar.

Zweckmäßige Weiterbildungen der erfindungsgemäßen Vorrichtung sind Gegenstand der Unteransprüche 3 bis 5.

Im folgenden wird die Erfindung unter Hinweis auf die Zeichnung anhand eines Ausführungsbeispieles näher erläutert.

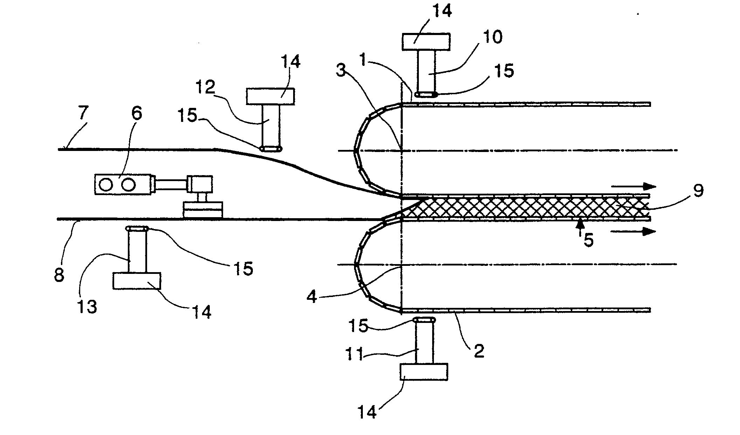

In der einzigen Figur 1 ist schematisch der Einlaufbereich einer Doppelbandanlage in Seitenansicht dargestellt. Die Doppelbandanlage besteht aus einem oberen Transportband 1 und einem unteren Transportband 2. Zwischen diesen Transportbändern wird der Formhohlraum 5 begrenzt, der in seiner Höhe durch Auf- und Abbewegung der Transportbänder verstellbar ist. Seitlich erfolgt die Abdichtung in bekannter Weise durch mitlaufende Seitenbänder oder andere Maßnahmen. Die Förderbänder laufen um Umlenkpunkte 3 und 4 um. Die Produktionsrichtung ist nach der Zeichnung von links nach rechts festgelegt.

In den Formhohlraum laufen von Wickelspulen abgenommene Deckschichten 7 und 8 ein, die vorher profiliert werden können. Beispielsweise handelt es sich hier um verzinktes Stahlblech, so daß ein Schaumstoffplattenstrang 9 mit einem ganz bestimmten Profil entsteht. Zwischen diesen Deckschichten ist im Einlaufbereich der Mischkopf 6 hin- und herbewegbar. Das Portal, an dem der Mischkopf bewegbar ist, ist nicht gezeigt.

Kurz vor den Umkehrpunkten 3 und 4 der Transportbänder 1 und 2 finden sich die Induktionsheizungen 10 und 11 für die Transportbänder. Der Mittelfrequenzgenerator ist mit 14 bezeichnet. Für die Deckschichten 7 und 8 sind entsprechende Induktionsheizungen 12 und 13 vorgesehen, wobei die entsprechenden Induktionsspulen (15) immer in der Näher der aufzuheizenden Platten bzw. Deckschichten liegen.

Wenn es sich um eine Vorrichtung mit Deckschichten aus elektrisch und magnetisch leitendem Material handelt, dann ist diese vorzugsweise mit Induktionsheizungen sowohl für die Transportbänder als auch für die Deckschichten ausgerüstet. Die Induktionsheizung 13 für die untere Deckschicht 8 befindet sich kurz vor dem Schaumauftrag durch den oszillierenden Mischkopf 6. Die Induktionsheizung 12 für die obere Deckschicht ist etwas weiter in Produktionsrichtung nach "rechts" versetzt. Sie befindet sich unmittelbar im Einlauf der Deckschicht 7 in den Formhohlraum. Diese Induktionsheizungen 12 und 13 können ebenso wie die Induktionsheizungen 10 und 11 sehr präzise eingesetzt und geregelt werden. Es ist beispielsweise auch eine Anpassung der erforderlichen Energiedichte an den Profilquerschnitt der Deckschichten möglich.

**Patentansprüche**

1. Vorrichtung zur kontinuierlichen Herstellung von mit Deckschichten beschichteten Polyurethan-Schaumstoffplatten mit zwei, einen Formhohlraum zwischen sich begrenzenden endlosen Transportbändern aus elektrisch und magnetisch leitendem Material und mit einem quer zur Produktionsrichtung oszillierenden Mischkopf, dadurch gekennzeichnet, daß für jedes der beiden Transportbänder (1, 2) eine Induktionsheizung (10, 11) vorgesehen ist.

2. Vorrichtung zur kontinuierlichen Herstellung von mit Deckschichten aus elektrisch und magnetisch leitendem Material beschichteten Polyurethan-Schaumstoffplatten mit zwei, einen Formhohlraum zwischen sich begrenzenden endlosen Transportbändern und mit einem quer zur Produktionsrichtung oszillierenden Mischkopf, dadurch gekennzeichnet, daß für jede Deckschicht (7, 8) eine Induktionsheizung (12, 13) vorgesehen ist.

3. Vorrichtung nach Anspruch 1, dadurch gekennzeichnet, daß die Induktionsheizungen (10, 11) kurz vor der Umkehrung der Transportbänder (1, 2) in Produktionsrichtung angeordnet sind.

4. Vorrichtung nach einem oder mehreren der vorstehenden Ansprüche, dadurch gekennzeichnet, daß die Frequenz und/oder die Spannung der Induktionsheizungen (10, 11, 12, 13) zum Beeinflussen der Eindringtiefe und damit der Heizleistung regelbar sind.

5. Vorrichtung nach Anspruch 2, dadurch gekennzeichnet, daß die Induktionsheizung (13) für die untere Deckschicht (8) unmittelbar im Bereich des Schaumauftrages (bei 6) und die Induktionsheizung (12) für die obere Deckschicht (7) direkt vor dem Einlauf in den Formhohlraum angeordnet ist.

6. Vorrichtung zur kontinuierlichen Herstellung von mit Deckschichten aus elektrisch und magnetisch leitendem Material beschichteten Polyurethan-Schaumstoffplatten mit zwei einen Formhohlraum zwischen sich begrenzenden endlosen Transportbändern aus elektrisch und magnetisch leitendem Material und einem quer zur Produktionsrichtung oszillierenden Mischkopf, dadurch gekennzeichnet, daß für jedes der beiden Transportbänder (1 und 2) und für jede Deckschicht (7, 8) eine Induktionsheizung (10, 11, 12, 13) vorgesehen ist.